# EUROPÄISCHE PATENTANMELDUNG

(11) **EP 1 627 851 A2**
(43) Veröffentlichungstag der Anmeldung: **22.02.2006**
(21) Anmeldenummer: 04022513.8
(22) Anmeldetag: 22.09.2004
(51) Int. Cl.: C01B 11/02, C11D 3/02, C11D 3/395, A01N 59/00

(54) **Bleich- und/oder Desinfektions- und/oder Desodorierungs- und/oder Oxidationsmittel-Lösung mit einem Gehalt an Chlordioxid**

(30) Priorität: 19.08.2004 DE 202004012979 U
(71) Anmelder: Schmid, Erich, Dr., 67435 Neustadt-Gimmeldingen (DE)
(72) Erfinder: Schmid, Erich, Dr., 67435 Neustadt-Gimmeldingen (DE)
(74) Vertreter: Ratzel, Gerhard

(57) **Zusammenfassung**

Die Erfindung betrifft eine Bleich- und/oder Desinfektions- und/oder Desodorierungs- und/oder Oxidationsmittel-Lösung mit einem Gehalt an Chlordioxid, die erfindungsgemäß hergestellt ist unter Einsatz von an sich bekannten Chlordioxid-Vorstufen und mindestens einer oxidierenden Säure. Nach einer Ausführungsform ist die erfindungsgemäße Lösung weiterhin unter Anwesenheit einer nicht oxidierenden Säure hergestellt. Die erfindungsgemäße Lösung kann ferner hergestellt sein unter Einsatz von an sich bekannten Chlordioxid-Vorstufen und mindestens einer nicht oxidierenden Säure unter anschließendem Zusatz von mindestens einer oxidierenden Säure. Das Lösungsmittel besteht vorzugsweise aus Wasser. Die oxidierende Säure besteht vorzugsweise aus Salpetersäure. Eine weitere Ausführungsform der erfindungsgemäßen Lösung kann einen Chlordioxid-Binder enthalten, der ein Komplex-Binder und/oder ein Assoziations-Binder (Anlagerungsbinder) und/oder ein partieller Binder und/oder ein Tensid und/oder ein Ampholyt ist.

## Beschreibung

Die Desinfektion mittels Chlordioxid ist in der Lebensmittelindustrie und angrenzenden Bereichen ein Verfahren, das auf Grund seiner Effektivität immer weiter vordringt.

Beim häufigsten Verfahren wird das als Desinfektionskomponente verwendete Chlordioxid direkt vor Ort durch Vermischen von Säuren mit Natriumchlorit freigesetzt, gemäß der Gleichung

5 NaClO₂ + 4 HCl → 4 ClO₂ + 2 H₂O + 5 NaCl.

Andere Verfahren laufen über die Bildung von Chlordioxid mit Hilfe von Peroxodisulfaten gemäß der Gleichung

2 NaClO₂ + Na₂S₂O₈ → 2 ClO₂ + 2 Na₂SO₄ .

Ein weiteres Verfahren der Herstellung erfolgt über die Verwendung von Amidosulfonsäure gemäß der Gleichung

5 NaClO₂ + 4 HSO₃NH₂ → 4 ClO₂ + 4 NaSO₃NH₂ + NaCl+2 H₂O.

Die entstehenden Mischungen sind vor allem in der Gasphase und besonders an der Phasengrenze zwischen Flüssigkeitsspiegel und Luftraum sehr aggressiv und bilden häufig Lochfraß, der immer durch Chloride induziert wird.

Das Verfahren der Bildung von Chlordioxid aus der Reaktion von Salzsäure mit Natriumchlorit produziert viele Chlorid-lonen, so dass das Auftreten von Lochfraß vor allem in saurer Lösung sehr wahrscheinlich ist. Dieser Lochfraß wurde an Stählen nachgewiesen:

Die Stähle wurden drei Tage einer 1:1 Mischung aus 9 %iger Salzsäure und 7,5 %iger Natriumchloritlösung ausgesetzt.

Sowohl bei Kohlenstoff-Nickel-Stählen als auch bei Chrom-Nickel-Molybdän-Stählen wurde ein deutlicher Lochfraß festgestellt.

Überraschenderweise konnte nun gefunden werden, dass bei der Erzeugung von Chlordioxid mittels oxidierender Säuren, insbesondere Salpetersäure, kein Lochfraß auftritt. Dies ist insofern besonders überraschend, als sich beim Vermischen von Natriumchlorit mit oxidierenden Säuren sehr reaktive Gemische bilden könnten, im Falle von Salpetersäure sogar "Königswasser".

Diese überraschenderweise gute Korrosionsschutzwirkung wurde an Kohlenstoff-Nickel-Stählen und Chrom-Nickel-Molybdän-Stählen unter jeweiligem Einsatz einer 7,5 %igen wässrigen Natriumchloritlösung und einer 50,1 %igen Salpetersäure nachgewiesen.

Hinsichtlich der Konzentrationen ist anzumerken, dass Natriumchlorit, insbesondere mit einer Konzentration von 0 - 40 % und die oxidierenden Säuren mit einer Konzentration von 0 - 99 % in Betracht gezogen sind. Definitionsgemäß werden die Ausgangsstoffe, die in den oben genannten chemischen Gleichungen genannt sind, als Chlordioxidvorstufen bezeichnet.

Bei einer bevorzugten Ausführungsform der Herstellung der erfindungsgemäßen Stoffe wird beispielsweise Natriumchlorit und Salpetersäure in einem Reaktor zusammengeführt, gemischt und dann das entstehende Chlordioxid zu Desinfektionszwecken eingesetzt. Die gleichzeitig anwesende Salpetersäure bewirkt einen Korrosionsschutz von Edelstahl.

Nach einer weiteren bevorzugten Ausführungsform der Schaffung der erfindungsgemäßen Stoffe bzw. Mittel wird Chlordioxid nach einem Verfahren des Standes der Technik aus Salzsäure und Natriumchlorit hergestellt. Ferner wird Wasser mit dem entstandenen Chlordioxid versetzt und sodann mit Salpetersäure vermischt. Diese Mischung wird zur Desinfektion von Tanks und Gerätschaften verwendet. Der Vorteil dieser Anwendung besteht darin, dass auch gleichzeitig noch Beläge in den zu desinfizierenden Tanks, wie z.B. Bierstein in der Getränkeindustrie, Milchstein in der Molkerei oder mineralische Beläge in Sprudelfabriken gelöst werden.

Ein weiterer Vorteil vorliegender Erfindung besteht darin, dass durch den zusätzlichen Einsatz von Salpetersäure die Mischung leitfähigkeitssteuerbar ist, was für die praktische Anwendung bei der Automatisierung von großer Bedeutung ist.

Ein in der Getränkeindustrie übliches Verfahren ist die sogenannte CIP-Reinigung, wobei das Kürzel "CIP" für "cleaning in place" steht.

Bei diesem Verfahren wird eine Ansatzlösung in einem Stapelbehälter im Kreislauf über die zu reinigenden und zu desinfizierenden Tanks geführt.

Nach dieser Prozedur ist der Tank sauber und desinfiziert und bereit, neu gefüllt zu werden.

Die Materialien dieser Tanks sind immer aus Edelstahl, wobei bei herkömmlichen Verfahren ohne Salpetersäure stets eine starke Korrosionsgefährdung, speziell durch Lochfraßkorrosion, besteht. Diese kann oft so schnell gehen, dass ein Tank binnen kurzer Zeit zum Sieb wird.

Die Herstellung der erfindungsgemäßen Mittel kann kombiniert werden mit der Verwendung von Chlordioxid-Bindern, die die Funktion haben, das Chlordioxid temporär oder dauernd in der Weise zu binden, dass ein unerwünschter Chlordioxid-Geruch verschwindet. Diese Chlordioxid-Binder können Komplex-Binder und/oder Assoziations-Binder (Anlagerungsbinder) und/oder partielle Binder und/oder Tenside und/oder Ampholyte sein.

## Patentansprüche

1. Bleich- und/oder Desinfektions- und/oder Desodorierungs- und/oder Oxidationsmittel-Lösung mit einem Gehalt an Chlordioxid
**dadurch gekennzeichnet,**
**dass** sie hergestellt ist unter Einsatz von an sich bekannten Chlordioxid-Vorstufen und mindestens einer oxidierenden Säure.

2. Lösung nach Anspruch 1,
**dadurch gekennzeichnet,**
**dass** sie hergestellt ist unter Einsatz von an sich bekannten Chlordioxid-Vorstufen und mindestens einer nicht oxidierenden Säure und unter Zusatz mindestens einer oxidierenden Säure.

3. Lösung nach Anspruch 1 - 2,
**dadurch gekennzeichnet,**
**dass** sie hergestellt ist unter Einsatz von an sich bekannten Chlordioxid-Vorstufen und mindestens einer nicht oxidierenden Säure und unter anschließendem Zusatz mindestens einer oxidierenden Säure.

4. Lösung nach Anspruch 1 - 3,
**dadurch gekennzeichnet,**
**dass** das Lösungsmittel aus Wasser besteht.

5. Lösung nach Anspruch 1 - 4,
**dadurch gekennzeichnet,**
**dass** die oxidierende Säure aus Salpetersäure besteht.

6. Lösung nach Anspruch 1 - 5,
**dadurch gekennzeichnet,**
**dass** sie einen Chlordioxid-Binder enthält.

7. Lösung nach Anspruch 1 - 6,
**dadurch gekennzeichnet,**
**dass** der Chlordioxid-Binder ein Komplex-Binder und/oder ein Assoziationsbinder (Anlagerungsbinder) und/oder ein partielle Binder und/oder ein Tensid und/oder ein Ampholyt ist.
